# EUROPEAN PATENT APPLICATION

(11) **EP 4 763 799 A1**
(43) Date of publication of application: **24.06.2026**
(21) Application number: 25307248.2
(22) Date of filing: 22.12.2025
(51) Int. Cl.: C01B 3/16, C01B 3/50, C01B 3/56, C10K 3/02, C25B 1/04, C25B 15/08, C10G 2/00

(54) **INTEGRATED REFORMER AND REVERSE WATER GAS SHIFT REACTIONS IN A SYNTHETIC HYDROCARBON PRODUCTION PROCESS AND RELATED SYSTEMS**

(30) Priority: 23.12.2024 EP 24307271
(71) Applicant: Technip Energies France, 92741 Nanterre Cedex (FR)
(72) Inventor: HAMDI, Mehdi, 92741 Nanterre Cedex (FR); RIEGMAN, Jan-Jaap, 92741 Nanterre Cedex (FR)
(74) Representative: Edson, Russell Gregory

(57) **Abstract**

Methods for producing synthetic fuels may include reacting hydrogen and carbon dioxide in with a first catalyst and an adsorbent in a first reverse water gas shift (rWGS) reactor to produce hydrogen, carbon monoxide, and water; cooling the hydrogen, carbon monoxide, and water produced in the rWGS, to produce a cooled syngas; separating, from the cooled syngas, water to produce a syngas comprising carbon monoxide, hydrogen, unconverted carbon dioxide, and methane; purifying the cooled syngas; reacting the cooled syngas with a second catalyst to produce a synthetic hydrocarbon solution; and purifying the synthetic hydrocarbon solution to produce a final product.

## Description

### Technical Field

The present disclosure relates generally to chemical processing and, more particularly (although not necessarily exclusively), to systems and methods for producing synthetic fuels from carbon dioxide and water.

### Background

Synthetic fuel or synfuel is a liquid fuel, or sometimes gaseous fuel, compatible with combustion engines can be obtained from syngas (synthesis gas), a mixture of carbon monoxide and hydrogen. The syngas may be derived from gasification of solid feedstocks such as coal or biomass or by reforming of natural gas. Recently, processes are being developed that utilize alternative energy sources in the production of synthesis fuel. However, the processes to produce such synthesis fuels that are compatible with combustion engines often require significant and time-consuming infrastructural changes.

### Summary

One or more embodiments include a method that comprises: reacting hydrogen and carbon dioxide in the presence of a first catalyst in a first reverse water gas shift (rWGS) reactor in reaction mode to produce a rWGS product comprising hydrogen, carbon monoxide, and water, wherein a catalyst bed inlet temperature in the rWGS reactor ranges from 250 °C to 400 °C; removing at least a portion of the water from the rWGS product while the rWGS product is in the first rWGS reactor; reacting recycle hydrocarbons from a synthesis unit in a reforming unit to produce a reformer effluent; cooling and mixing the rWGS product with the reformer effluent to produce a cooled syngas, wherein the cooled syngas comprises hydrogen, carbon monoxide, methane, carbon dioxide, and water; removing at least a portion of the water from the cooled syngas to produce a purified syngas; reacting the purified syngas in the presence of a second catalyst in a synthesis unit to produce synthetic hydrocarbons; and purifying the synthetic hydrocarbons to produce a hydrocarbon product and the recycle hydrocarbons.

One or more embodiments include the method of the preceding paragraph, wherein the first rWGS reactor contains a first adsorbent material and/or a water permeating membrane for the removing of the at least a portion of the water.

One or more embodiments include the method of any preceding paragraph, wherein the reacting of the hydrogen and the carbon dioxide is performed with an excess of the hydrogen.

One or more embodiments include the method of any preceding paragraph, wherein the reforming unit comprises a pre-former, steam methane reformer (SMR), autothermal reformer (ATR), partial oxidation (POX), the like, or any combination thereof.

One or more embodiments include the method of any preceding paragraph, wherein the cooling and mixing of the rWGS product with the reformer effluent comprises first cooling then mixing.

One or more embodiments include the method of any preceding paragraph, wherein the method further comprises: heating a regeneration gas with heat from the reformer effluent to produce a heated regeneration gas; and contacting a second adsorbent material in a second rWGS reactor in regeneration mode with the heated regeneration gas to extract water from the second adsorbent material. The method may further comprise: electrolyzing water to produce hydrogen and oxygen; feeding at least a portion of the hydrogen produced by the electrolyzing to the first rWGS reactor; and using at least a portion of the water produced from regenerating the second rWGS reaction and/or at least a portion of the water removed from the rWGS product in the electrolyzing. The method may further comprise: using at least a portion of the water removed from the cooled syngas in the electrolyzer. The method may further comprise: changing the first rWGS reactor from the reaction mode to the regeneration mode; and changing the second rWGS reactor from the regeneration mode to the reaction mode.

One or more embodiments include the method of any preceding paragraph, wherein the recycle hydrocarbons comprise light hydrocarbon off-gas, liquefied petroleum gas, naphtha, or any combination thereof. The purifying of the synthetic hydrocarbons may include capturing at least a portion of the carbon dioxide from the recycle hydrocarbons; and wherein the method further comprises supplying at least a portion of the carbon dioxide from the recycle hydrocarbons to the first rWGS reactor.

One or more embodiments include the method of any preceding paragraph, wherein the method further comprises: supplying heat to the first rWGS reactor from the reformer effluent.

One or more embodiments include the method of any preceding paragraph, wherein the method further comprises: preheating the hydrogen and the carbon dioxide before introduction to the rWGS reactor. One or more embodiments may further include preheating the hydrogen and the carbon dioxide utilizing heat recovered from the reformer effluent and/or the rWGS product originating from the first rWGS reactor and/or a further rWGS product originating from a further rWGS reactor.

One or more embodiments include the method of any preceding paragraph, wherein the hydrocarbon product is a synthetic fuel, a wax, an alcohol, an olefin, or ethylene oxide.

One or more embodiments include the method of any preceding paragraph, wherein the synthesis unit includes a Fischer-Tropsch unit, a methanol synthesis unit, a methanol synthesis unit combined with a methanol to gasoline unit, a methanol synthesis unit combined with a methanol to jet fuel unit, a syngas to olefines synthesis unit, a syngas to ethylene oxide unit, or any combination thereof.

One or more embodiments include a system that comprises: a first rWGS reactor in reaction mode configured to receive a carbon dioxide stream and a first hydrogen stream, receive heat from a reformer effluent stream, produce a rWGS product stream, and remove at least a portion of water in the rWGS product stream in situ; a reforming unit integrated with the first rWGS reactor and configured to receive a recycle hydrocarbon stream and produce the reformer effluent stream; condensation and separation unit configured to receive the rWGS product stream, the reformer effluent stream, or a mixture thereof, remove water therefrom, and produce a water stream and a cooled syngas stream; a first separation and conditioning unit configured to receive the cooled syngas stream, extract hydrogen and carbon dioxide therefrom, and produce a purified syngas stream; a synthesis unit configured to receive the purified syngas stream and produce a synthetic hydrocarbons stream; and a second separation and conditioning unit configured to receive the synthetic hydrocarbons stream and produce a hydrocarbon product stream and the recycle hydrocarbon stream.

One or more embodiments include the system of the preceding paragraph, wherein the first rWGS reactor contains a first adsorbent material that adsorbs water, and wherein the system further comprises a second rWGS reactor in regeneration mode configured to receive heat from the reformer effluent stream and produce a first water stream, the second rWGS reactor containing a second adsorbent material.

One or more embodiments include the system of any preceding paragraph, wherein the first rWGS reactor contains a water permeating membrane.

One or more embodiments include the system of any preceding paragraph, wherein the system further comprises: a purification unit between the second separation and conditioning unit and the reforming unit configured to remove at least a portion of carbon dioxide in the recycle hydrocarbon stream.

One or more embodiments include the system of any preceding paragraph, the recycle hydrocarbon stream comprise light hydrocarbon off-gas, liquefied petroleum gas, naphtha, or any combination thereof.

One or more embodiments include the system of any preceding paragraph, wherein the synthesis unit includes a Fischer-Tropsch unit, a methanol synthesis unit, a methanol synthesis unit combined with a methanol to gasoline unit, a methanol synthesis unit combined with a methanol to jet fuel unit, a syngas to olefines synthesis unit, a syngas to ethylene oxide unit, or any combination thereof.

One or more embodiments include the system of any preceding paragraph, wherein the hydrocarbon product stream is a synthetic fuel, a wax, an alcohol, an olefin, or ethylene oxide.

### Brief Description of the Drawings

FIG. 1 is a flow chart of a process for producing synthetic fuels from carbon dioxide and water according to at least some embodiments of the present disclosure.
FIG. 2 is a diagram of a reaction system for generating synthetic fuels that integrates a reverse water gas shift (rWGS) reactor according to at least some embodiments of the present disclosure.

### Detailed Description

Certain aspects and features of the present technology relate methods of and systems for producing a hydrocarbon product (e.g., a synthetic fuel, waxes, alcohols, olefins, ethylene oxide, and the like) from water and carbon dioxide sources. The methods and systems include at least one rWGS reactor therein. A rWGS reaction reacts carbon dioxide and hydrogen to produce carbon monoxide and water. The produced carbon monoxide may be used as a portion of the syngas used to produce hydrocarbon product.

The rWGS reactor may be configured capture water in situ (e.g., using an adsorbent material and/or a water permeating membrane) during the rWGS reaction. Advantageously, reducing the water concentration in the rWGS reactor may shift the equilibrium of the rWGS reaction towards the products and allow for operating the rWGS reactor at a low temperature (e.g., from 250 °C to 400 °C). This may maximize the conversion of carbon dioxide to carbon monoxide and minimize the hydrogen import needed for the system as a whole. Thus, the systems and methods of the present disclosure may be more economically and environmentally friendly as compared to currently employed systems and methods that commonly operate the rWGS reactor from between 600 °C to 800 °C. Further, the reduced temperature in the rWGS reactor may also reduce the risk of carburization and corrosion of the rWGS reactor as compared to currently employed systems and methods.

In some instances, a water permeating membrane may be used to capture water during the rWGS reaction. The water therefrom may be continuously extracted during operation, which may allow for continuous production of the desired hydrocarbon product. The extracted water may be use in other aspects of the systems and methods, for example, as feed for an electrolyzer, if included, or as a source of water for steam. In such instances, the system may include a single rWGS reactor or two or more rWGS reactors in parallel.

In some instances, the systems and methods of the present disclosure may use an adsorbent material to capture water during the rWGS reaction. In such instances, two or more rWGS reactors may be used in parallel where each rWGS reactor can be changed between a reaction mode and a regeneration mode. In the reaction mode, the rWGS reaction occurs in the rWGS reactor. In regeneration mode, the rWGS reactor may be operated to regenerate the adsorbent material therein by removing the adsorbed water. The adsorbed water may be use in other aspects of the systems and methods, for example, as feed for an electrolyzer, if included, or as a source of water for steam.

Further, the systems and methods of the present disclosure may have an integrated rWGS reactor and reformer, which may close the carbon loop and minimize the import hydrogen required. For example, the integrated system may be designed such that the reforming provides sufficient heat to drive the rWGS reaction with no additional heating system. In another example, use recuperative reforming integrated with one or more of the rWGS reactor may minimize the firing and maximize the energy efficiency of the reformer. The integration of Enhanced Annual Reformer Tube for Hydrogen (EARTH^{®}) and syngas tubes may enhance the heat integration and equipment design as the temperature difference between the hot reformer effluent and heat sinks in the rWGS section may be optimized.

The illustrative examples herein are given to introduce the reader to the general subject matter discussed here and are not intended to limit the scope of the disclosed concepts. The following sections describe various additional features and examples with reference to the drawings in which like numerals indicate like elements but, like the illustrative examples, should not be used to limit the present disclosure.

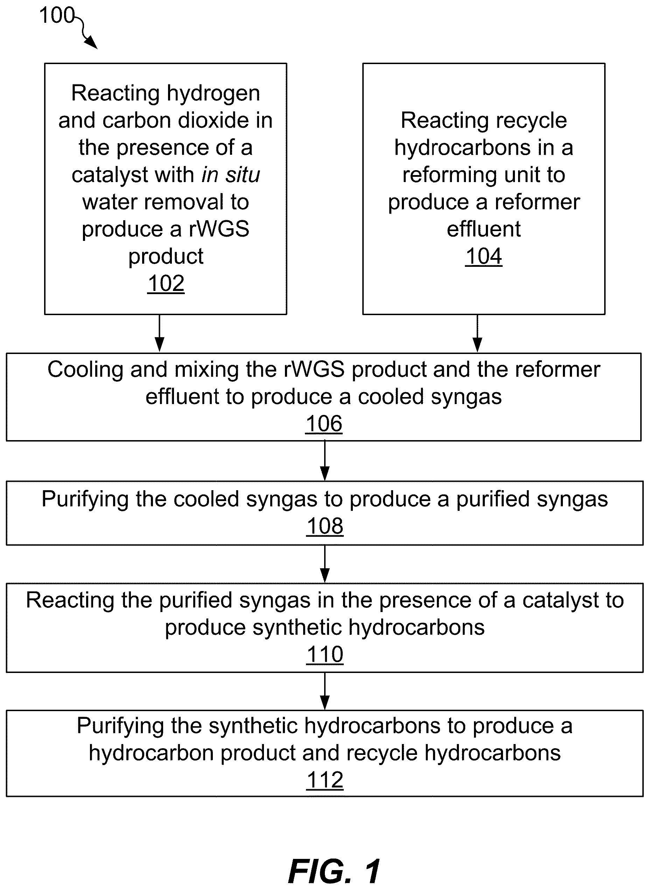

FIG. 1 illustrates a flow chart for a method 100 for producing synthetic fuels from carbon dioxide and water. Step 102 may include reacting hydrogen and carbon dioxide in the presence of a catalyst to produce a rWGS product comprising carbon monoxide and water. During the reaction, at least a portion of the water may be remove in situ, for example, using an adsorbent material in the rWGS reactor and/or using a water permeating membrane. Advantageously, reducing the water concentration in the rWGS reactor may shift the equilibrium of the rWGS reaction towards the products and allow for operating the rWGS reactor at a low temperature. Further, the rWGS reaction may be performed with an excess of hydrogen. In situ removal of water and an excess of hydrogen may result in near complete, if not complete, conversion of the carbon dioxide to carbon monoxide.

As a side product some methane may be formed through the methanation reaction. Accordingly, the rWGS product may comprise predominantly carbon monoxide and hydrogen with low concentrations of water, carbon dioxide, and methane. The molar ratio of hydrogen to carbon monoxide in the rWGS product may range from 0.5:1 to 5:1 (e.g., 0.5:1 to 4:1, or 0.5:1 to 3:1).

The rWGS reaction is an endothermic reaction with higher conversion rates of carbon dioxide to carbon monoxide occurring at higher temperatures (e.g., from 600 °C to 1000 °C). However, the in situ removal of water and, optionally, an excess of hydrogen allows for a lower reaction temperature to achieve high conversion of carbon dioxide to carbon monoxide. A catalyst bed inlet temperature in an rWGS reactor may range from 250 °C to 400 °C (e.g., 250 °C to 375 °C, 250 °C to 350 °C, 250 °C to 325 °C, or 250 °C to 300 °C). A catalyst bed outlet temperature in an rWGS reactor may range from 250 °C to 400 °C (e.g., 250 °C to 375 °C, 250 °C to 350 °C, 250 °C to 325 °C, or 250 °C to 300 °C).

The hydrogen and carbon dioxide, whether introduced to the rWGS reactor individually or as a mixture, may be preheated to a temperature ranging from 250 °C to 400 °C (e.g., 275 °C to 400 °C, 300 °C to 400 °C, 325 °C to 400 °C, or 350 °C to 400 °C). The hydrogen and carbon dioxide can be preheated before introduction to the rWGS reactor utilizing heat recovered from a reformer effluent stream and/or a rWGS product stream. This may improve overall thermal efficiency of the system and may reduce the need for separate heating equipment, which can contribute to lower capital expenditure.

A molar ratio of hydrogen to carbon dioxide as reactants for the rWGS reaction may range from 1.5:1 to 10:1 (e.g., 1.5:1 to 7:1, 1.5:1 to 5:1, or 1.5:1 to 3:1).

The hydrogen and carbon dioxide may be from any suitable source. For example, the hydrogen may be produced via the electrolysis of water. Other hydrogen sources may include, but are not limited to, steam reforming, pyrolysis, partial oxidation, or by separation from another hydrogen-containing stream.

The carbon dioxide can be from any source and preferably is a gas stream having a high carbon dioxide concentration (e.g., greater than 75% carbon dioxide, greater than 90% carbon dioxide, or greater than 95% carbon dioxide). Lower carbon dioxide concentrations are feasible if the major other component in the stream is hydrogen. The carbon dioxide source may be from biogenic nature for example from a fermentation process or Direct Air Capture (DAC), although carbon dioxide sources may also be used.

Any catalyst that facilitates the rWGS reaction may be used. For example, catalysts may include, but are not limited to, iron, cobalt, chromium, noble metals, molybdenum, the like, and any combination thereof. The catalyst may optionally be on a support like silica, alumina, titania, or carbon.

The adsorbent material may be any hygroscopic material that does not react with the reactants or products at the reaction conditions. Examples of adsorbent materials may include, but are not limited to, molecular sieves, activated alumina, silica gel, the like, or any combination thereof. The water permeating membrane may contain catalyst. In either instances, in situ water removal may increase the carbon dioxide conversion and carbon monoxide selectivity at lower reactor temperatures.

Referring again to FIG. 1, in step 104, which may be performed in parallel with step 102, recycle hydrocarbons from a synthesis unit, which is discussed in more detail below, may be reacted to produce a reformer effluent. The recycle hydrocarbons may include hydrocarbons produced in step 110 but that are not part of the desired hydrocarbon product of step 112. Said hydrocarbons may be recycled back into the system and reacted in step 104 to produce the reformer effluent. The reformer may react hydrocarbons and an oxygen source (e.g., oxygen gas and/or steam) to produce carbon monoxide and hydrogen. The reformer effluent may also include unreacted light hydrocarbons, carbon dioxide, water, and other byproducts. Examples of reforming processes may include, but are not limited to, pre-reforming, steam methane reforming, dry methane reforming, autothermal reforming, partial oxidation, and the like.

In step 106, the rWGS product and the reformer effluent may be cooled and mixed to produce a cooled syngas. The cooling and mixing may be in any order or performed simultaneously. For example, each of the rWGS product and the reformer effluent may be cooled then mixed. In another example, one of the rWGS product and the reformer effluent may be partially cooled then mixed with the other before further cooling. In yet another example, the rWGS product and the reformer effluent may be mixed then cooled.

In step 106, the cooling may cause water to condense from the rWGS product and/or the reformer effluent. The cooled syngas may contain carbon monoxide, hydrogen, unconverted carbon dioxide, methane, and, if used upstream processes, inert gases (e.g., nitrogen and/or argon). The cooled syngas may still include some water.

The water separated from the rWGS product and/or the reformer effluent may be recycled and reused in the rWGS reactor, a reformer, an electrolyzer, or treated in a waste-water treatment plant. Optionally, the water may be treated after separation and before use to remove contaminants.

At step 108, the cooled syngas may be purified and conditioned to produce a purified syngas. The purifying and conditioning may include carbon dioxide capture, hydrogen removal, methane removal, and/or other process to clean the syngas for the downstream production of synthetic hydrocarbons. For example, the carbon dioxide capture may be performed via membrane capture, vacuum swing adsorption, pressure swing adsorption, cryogenic, amine adsorption, or any combination thereof. In another example, hydrogen may be removed using a membrane unit. The carbon dioxide, hydrogen, methane, and other components removed from the cooled syngas may each be used within the method or system thus reducing the import of said components into the system from an external source.

At step 110, the method 100 may include reacting the carbon monoxide and hydrogen in purified syngas in the presence of a catalyst to produce a synthetic hydrocarbon. In some instances, the synthesis unit that includes the catalyst may be a Fischer-Tropsch reactor. In some instances, the catalyst may include iron, cobalt, nickel, ruthenium, or any other common catalysts that may be used in a Fischer-Tropsch (FT) unit.

At step 112, the method 100 may include purifying the synthetic hydrocarbon to produce a hydrocarbon product and the recycle hydrocarbons. For example, the purification may include cooling the synthetic hydrocarbon, separating the water from the synthetic hydrocarbon solution via condensation, performing a reaction on the synthetic hydrocarbon (e.g., hydrogenation, hydrocracking, isomerization, aromatization, the like, and any combination thereof), and separating the hydrocarbon product. The water separated during the purification process may be recycled back to the electrolyzer, or treated at a waste-water treatment plant. Any hydrocarbons separated during the purification process may be used as the recycle hydrocarbons in the reformer.

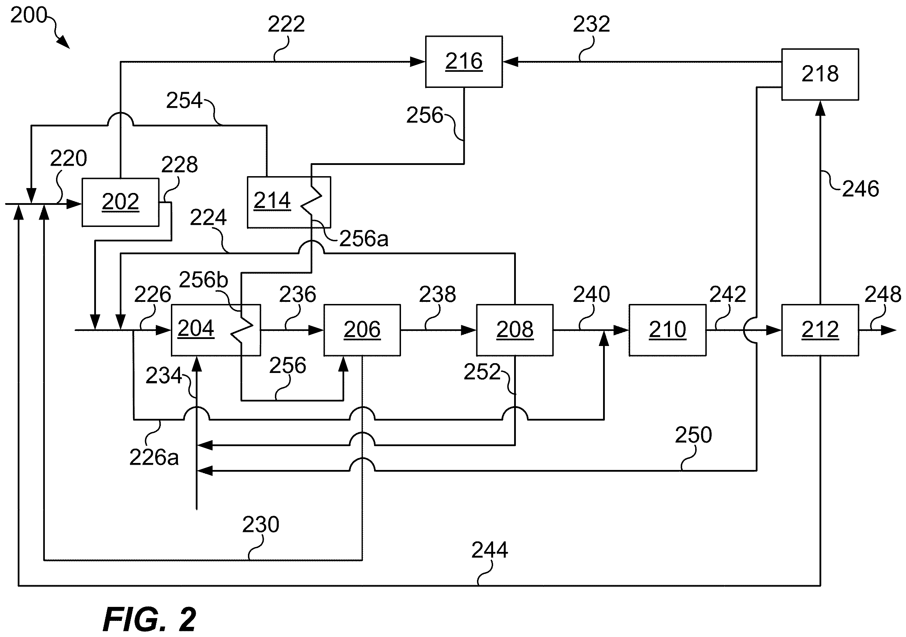

Methods of the present disclosure may include additional steps to those described in FIG. 1. The operating conditions, compositions, and the like described relative to FIG. 1 apply to the flow diagram of FIG. 2. The operating conditions, compositions, and the like that are further described relative to FIG. 2 apply to the methods of the present disclosure including the example method 100 of FIG. 1.

The systems of the present disclosure be used to generate a hydrocarbon product (e.g., a synthetic fuel, waxes, alcohols, olefins, ethylene oxide, and the like) using one or more operations or processes, such as electrolysis, conversion reactions, condensation, purification, and the like. The system may advantageously include a synthesis unit downstream of the rWGS reactor and a plurality of recycle stream to close the carbon loop and minimize the import of hydrogen required. Additionally, the system may advantageously reduce the power input required to generate the hydrocarbon product thus leading to a lower carbon footprint and higher efficiency of conversion.

FIG. 2 illustrates a flow diagram for an example synthetic fuel production system 200 having at least one (illustrated as two) rWGS reactors 204, 214 integrated therein. In the illustrated system 200, a first rWGS reactor 204 is in reaction mode, and a second rWGS reactor 214 is in regeneration mode. Systems and methods of the present disclosure may include one or more rWGS reactors in reaction mode and, optionally, one or more rWGS reactors in regeneration mode.

Each rWGS reactor in the system 200 may include an adsorbent material and/or a water permeating membrane. An rWGS reactor in reaction mode receives hydrogen and carbon dioxide, which react in the presence of a catalyst to produce carbon monoxide and water. As discussed previously, at least a portion of the water is removed in situ. An rWGS reactor in regeneration mode may be treated to (i) regenerate and/or replace the catalyst and (ii) regenerate and/or replace the adsorbent material, if used.

The use of a water permeating membrane may allow for rWGS reactors to run in reaction mode for years with continuous water removal. Accordingly, the system may include one or more rWGS reactors each with a water permeating membrane in parallel that operate primarily in reaction mode.

When using an adsorbent material in the rWGS reactors 204, 214, regeneration may include heating the adsorbent material. The heat may be provided, as described in more detail below, by the reformer effluent stream 256.

Having rWGS reactors 204, 214 in parallel and capable of switching between reaction mode and regeneration mode may allow for a continuous process with minimal upsets even with the use of adsorbent materials.

Water collected from the water permeating membrane and/or from regenerating the adsorbent material may be used in other processes within the system 200, for example, recycled back to electrolyzer 202 or sent to water treatment unit.

The hydrogen stream 226 and carbon dioxide stream 234 fed to the first rWGS reactor 204 in reaction mode may be from any suitable source (e.g., as described relative to FIG. 1). For example, the hydrogen stream 226 may include hydrogen produced via the electrolysis of water. In the illustrated example, a water stream 220 may be fed into an electrolyzer 202. The electrolyzer 202 may be configured to produce a hydrogen stream 228 and an oxygen stream 222. The hydrogen stream 228 may provide at least some of the hydrogen via hydrogen stream 226 for the first rWGS reactor 204 is in reaction mode. As discussed in more detail herein, additional hydrogen may be recycled from other upstream processes. In some instances, the system 200 may not include an electrolyzer. In such configurations, a hydrogen source may not be from the conversion of water. For example, the hydrogen may be produced in other processes such as steam reforming, pyrolysis, partial oxidation, or from another hydrogen containing stream, or any combination thereof.

The rGWS reaction of hydrogen and carbon dioxide in the presence of the rGWS catalyst and while removing water in situ occurs in the first rWGS reactor 204 in reaction mode. The operating conditions discussed in FIG. 1 apply to the first rWGS reactor 204. Other operating parameters for the first rWGS reactor 204 may include operating at a pressure ranging from 10 bar to 50 bar (e.g., 10 bar to 25 bar, from 20 bar to 35 bar, from 30 bar to 45 bar, or from 40 bar to 50 bar). In some instances, the pressure of the first rWGS reactor 204 in reaction mode may be maintained at a pressure and may deviate by no more than 2 bar during the rGWS reaction.

The catalyst may be contained within the first rWGS reactor 204 as a catalyst bed, within catalyst tubes, or catalyst membranes, each independently positioned within the first rWGS reactor 204. In some instances, the catalyst tubes may be configured to receive the hydrogen and carbon dioxide streams to produce a rWGS product stream 236 that includes carbon monoxide and hydrogen with low concentrations of water and carbon dioxide. The incoming hydrogen and carbon dioxide streams can be preheated before introduction to the rWGS reactor utilizing heat recovered from the rWGS product stream 236. The use of heat from the rWGS product stream associated with the reactor being fed provides for improved overall thermal efficiency of the system and reduced need for separate heating equipment, which can contribute to lower capital expenditure. Additionally, or alternatively, the hydrogen and carbon dioxide streams can be preheated using heat recovered from a further rWGS product stream, for example, a product stream originating from a further rWGS reactor, which may be comprised within the system.

The adsorption of water by the adsorbent material may be an exothermic process. Accordingly, at least a portion of the heat provided to maintain the endothermic rWGS reaction may be provided by the adsorption of water. In some instances, all of the rWGS reaction heat may be supplied by heat of adsorption so that the first rWGS reactor 204 in reaction mode is operated adiabatically.

The each of rWGS reactors or a line that contains the rWGS product stream 236 may include sensors and other devices that are useful in determining a saturation level of the adsorbent material. For example, a sensor or other device may directly measure the amount of water adsorbed in the adsorbent material. In another example, a sensor or other device may measure the moisture content in the rWGS product stream 236 to provide an indication of the efficacy of water adsorption by the adsorbent material and/or the water permeating membrane. When the adsorbent material reaches a specified saturation point or an insufficient amount of water is removed by the water permeating membrane, the first rWGS reactor 204 may be transitioned from reaction mode to regeneration mode and another rWGS reactor, if not already in reaction mode, may be transitioned from regeneration mode to reaction mode.

The second rWGS reactor 214 is illustrated in regeneration mode. The regeneration process may include one or more regeneration processes. Examples of regeneration processes may include, but are not limited to, blowdown treatments, reactor purging, condensing and extracting water from the remaining gas in the reactor, recovery of the reactants, regeneration of the adsorbent (e.g., removing water from the adsorbent), replacement of the adsorbent, replacement or repair of the water permeating membrane, regeneration of the rWGS catalyst, replacement of the rWGS catalyst, the like, and any combination thereof. During the regeneration process, the second rWGS reactor 214 in regeneration mode may be depressurized from the operating pressure while in reaction mode to atmospheric pressure.

The water recovered from gas condensation, in situ water removal with a water permeating membrane, and/or adsorbent regeneration may be used as feed for the electrolyzer 202. For example, as illustrated said water from adsorbent regeneration may be conveyed via water stream 254 to become at least part of the water stream 220. Optionally, water stream 254 may undergo treatment before adding to water stream 220 to remove impurities. Any recovered reactants may be recycled (not illustrated) back to the first rWGS reactor 204 in reaction mode.

The system 200 also includes a reforming unit 216, described in more detail below, that produces a reformer effluent stream 256. The reformer effluent stream 256 may be at an elevated temperature. For example, the outlet temperature of the reforming unit 216 may be 650 °C or greater (e.g., 675 °C or greater, 700 °C or greater, 725 °C or greater, 750 °C or greater, 775 °C or greater, 800 °C or greater, 825 °C or greater, 850 °C or greater, 875 °C or greater, 900 °C or greater, or 650 °C to 1100 °C). A higher outlet temperature may maximize hydrocarbon conversion in the reforming unit 216.

Because the reformer effluent stream 256 is at such a high temperature, the reformer effluent stream 256 may flow through lines in each of the rWGS reactors 204, 214 to supply heat for the rWGS reaction or supply heat for one or more of the regeneration processes (e.g., extracting the water from the adsorbent during adsorbent regeneration). For example, the reformer effluent stream 256 at portion 256a may provide heat to the catalyst tubes of the first rWGS reactor 204 in reaction mode. This heat may be in addition to heat provided by the adsorption of water by the adsorbent material when the adsorption process is exothermic. Additionally or alternatively, the reformer effluent stream 256 at portion 256b may provide heat to remove water from the adsorbent in the second rWGS reactor 214 in reaction mode. Further, the reformer effluent stream 256 may provide heat for other processes separate from the illustrated system including, but not limited to, steam generation, steam superheating, boiler feed water (BFW) preheating, or demineralized water (DMW) preparation and preheating. Further, the reformer effluent stream may provide heat for preheating the hydrogen and the carbon dioxide before introduction to the rWGS reactor. This can improve overall thermal efficiency of the system and can reduce the need for separate heating equipment, which can contribute to lower capital expenditure.

As illustrated, the reformer effluent stream 256 passes through the second rWGS reactor 214 at portion 256a and through the first rWGS reactor 204 at portion 256b. Alternatively, the reformer effluent stream 256 may pass through only one of the rWGS reactors 204, 214 or through neither of the rWGS reactors 204, 214. Alternatively, the reformer effluent stream 256 may be split into multiple streams with at least one stream passing through each of the rWGS reactors 204, 214. Valves and other hardware may be used to control the flow (e.g., the flow rate, whether there is or is not flow, and the like) of the reformer effluent stream 256 through each of the rWGS reactors 204, 214 to provide a desired amount of heat to each of the rWGS reactors 204, 214 as needed during operation.

By passing the reformer effluent stream 256 through the rWGS reactors 204, 214, the temperature of the reformer effluent stream 256 is reduced. Additionally, heat from the reformer effluent stream 256 may be used to facilitate the endothermic rWGS reaction and the regeneration processes, which may reduce the overall energy input for the system 200.

The rWGS product stream 236 and reformer effluent stream 256 may be mixed and cooled. The mixing may occur before, in, or after introduction to a condensation and separation unit 206. The condensation and separation unit 206 may separate water from the gas therein (a mixture of the rWGS product stream 236 and the reformer effluent stream 256). The water (or condensate) recovered in the condensation and separation unit 206 may be utilized internally in the system 200 (e.g., recycled to the electrolyzer 202 via water stream 230 or used as process steam generation), utilized in methods or systems outside the system 200, or treated in a waste-water treatment plant. The condensate may include a concentration of impurities or contaminants that may be removed from the condensate prior to inputting the condensate into the electrolyzer 202 or other units. The purification steps may include steps known by those skilled in the art for removing organic and inorganic material (e.g., hydrocarbons, salts, waxes, and any other contaminates) from water that may impact the performance of the electrolyzer 202 or other units.

The cooled syngas stream 238 may also include nitrogen and other inert gases. While the condensation and separation unit 206 removes water from the gas therein, it may not remove all of the water. Accordingly, the cooled syngas stream 238 may include water. In some instances, the cooled syngas stream 238 may be saturated with water.

The cooled syngas stream 238 is further treated in a first separation and conditioning unit 208 to produce a purified syngas stream that is predominantly hydrogen and carbon monoxide. The desired concentration of each of the hydrogen and carbon dioxide may vary depending on the downstream hydrocarbon synthesis reaction.

In some embodiments, the conditioning can include carbon dioxide capture, hydrogen removal, methane removal, and other purification processes to clean the syngas for the downstream synthesis unit. The carbon dioxide capture methods may include membrane capture, vacuum swing adsorption, pressure swing adsorption, cryogenic, amine adsorption, or any other carbon dioxide capture processes.

The rWGS product stream 236 may be lean in carbon dioxide due in part to the high conversion efficiency. The conversion efficiency may be higher as compared to currently employed methods due to the in-situ water adsorption or in-situ water separation with a membrane. The reformer effluent flow 256 and 258 from the reforming unit 216 may include a concentration of carbon dioxide as a result of the thermodynamic equilibrium. At least a portion of the captured carbon can be recycled back to the first rWGS reactor 204 in reaction mode via carbon dioxide stream 252. Depending on the carbon dioxide capture method, the carbon dioxide stream 252 may also include hydrogen. Since hydrogen is the other reactant in the rWGS reaction, the inclusion of hydrogen in the carbon dioxide stream 252 is suitable. If the carbon dioxide stream 252 includes a high concentration of hydrogen, at least a portion of the hydrogen may be removed from the carbon dioxide stream 252 (e.g., via membrane separation) to form hydrogen stream 224, which may, at least in part, be recycled back to the first rWGS reactor 204 in reaction mode at a rate sufficient to maintain the desired hydrogen to carbon dioxide ratio in the first rWGS reactor 204. Further, hydrogen produced by the electrolyzer 202 may be added (not illustrated) to the purified syngas stream 240 to adjust the hydrogen concentration therein.

The purified syngas stream 240 may be fed to the downstream synthesis unit 210. In the synthesis unit 210, the carbon monoxide and hydrogen react in the presence a catalyst to produce a synthetic hydrocarbons stream 242. The synthesis unit 210 may be a Fischer-Tropsch (FT) unit, a methanol synthesis unit, a methanol synthesis unit combined with a methanol to gasoline unit, a methanol synthesis unit combined with a methanol to jet fuel unit, a syngas to olefines synthesis unit, a syngas to ethylene oxide unit, or any combination thereof. For example, when the synthesis unit 210 is a Fischer-Tropsch unit, the synthetic fuel produced may include, but is not limited to, liquified petroleum gas (LPG), gasoline, diesel, waxes, and jet fuel. For a FT unit, the catalyst may include iron, cobalt, nickel, ruthenium, and other common FT catalysts.

In a case of low single pass conversion, the synthesis unit 210 may include an internal recycle of unconverted syngas.

One or more of the processes within the synthesis unit 210 may be exothermic. For example, during the conversion of syngas to synthetic fuels, an FT unit may be exothermic. Heat from the synthesis unit 210 may be used internally within the synthesis unit 210. Any excess energy produce within the synthesis unit 210 that is not being utilized within the synthesis unit 210 may be recovered as steam. The steam may be used to provide heat to other units within the system 200 for the conservation of energy. For example, the steam produced in a FT system may be a medium pressure steam. The steam may be used in upstream processes and/or downstream processes within the system 200 via reboilers to minimize energy loss in the system 200.

The synthetic hydrocarbons stream 242 produced in the synthesis unit 210 may include a wide range of components. Accordingly, the synthetic hydrocarbons stream 242 may be further processed (e.g., treated, separated, conditioned, or any combination thereof) in a second separation and conditioning unit 212 to produce a hydrocarbon product stream 248. The hydrocarbon product stream 248 may be a synthetic fuel (e.g., LPG, gasoline, diesel, jet fuel, and the like), waxes, alcohols, olefins, ethylene oxide, and the like depending on the synthesis unit 210. For example, when an FT unit is used, the desired synthetic fuel can include LPG, gasoline, diesel, jet fuel, and waxes. The second separation and conditioning unit 212 may purify the synthetic hydrocarbons stream 242 to produce the hydrocarbon product stream 248 with a desired composition.

The second separation and conditioning unit 212 may include cooling down the gas, condensing and removing water, reacting (e.g., via hydrogenation, hydrocracking, isomerization, and aromatization), separating, purifying, the like, and any combination thereof to produce the hydrocarbon product stream 248.

Water removed from the synthetic hydrocarbons stream 242 may be recycled back to the electrolyzer 202 via water stream 244. Similar to other water recycled within the system 200, the water stream 244 may be treated to remove contaminants.

When the second separation and conditioning unit 212 includes additional reaction processes, the corresponding reactor units may include or require additional feed gases (e.g., hydrogen for a hydrogenation reaction). The feed gases, where applicable, may come from or be supplemented by streams within the system 200. For example, at least a portion of the hydrogen stream 224 may be used as at least a portion of the hydrogen in a hydrogenation reaction.

In the second separation and conditioning unit 212, light off-gases ( may be separated from the synthetic hydrocarbon or produced in a reaction within the second separation and conditioning unit 212. The light off-gases may include, but are not limited to, unreacted syngas, light hydrocarbons (typically C1-C5 hydrocarbons), carbon dioxide, the like, and any combination thereof. The light off-gases may include small quantities of water.

A recycle hydrocarbon stream 246 produced in the second separation and conditioning unit 212 may be recycled back to the reforming unit 216, optionally passing through a purification unit 218. The optional purification unit 218 may include a carbon dioxide capture unit. The carbon dioxide capture unit may include a membrane capture, vacuum swing adsorption (VSA), pressure swing adsorption (PSA), cryogenic capture, amine adsorption process, or any other conventional carbon dioxide capture methods. In embodiments where carbon dioxide capture is performed, a carbon dioxide stream 250 may be produced and recycled back to the first rWGS reactor 204 in reaction mode.

The carbon dioxide capture unit may be included when the recycle hydrocarbon stream 246 includes a high carbon dioxide partial pressure (e.g., a carbon dioxide partial pressure of about 10 volume % or greater).

In some instances, the light off-gases can be rich in hydrogen. When the stream is rich in hydrogen, a hydrogen separation step (not shown) may be performed. For example, hydrogen separation may include a membrane separation. The hydrogen separation may be performed on the recycle hydrocarbon stream 246 before passing through the reforming unit 216. The resulting hydrogen stream (not shown) may be recycled back to any suitable location in the system 200 including to hydrogen stream 226, to purified syngas stream 240, the like, and any combination thereof.

The recycle hydrocarbon stream 232 after purification, or the recycle hydrocarbon stream 246 without purification, may be preheated and mixed with steam (e.g., steam produced within the system 200 including during regeneration of the adsorbent material and/or steam from the synthesis unit 210) for use as a feed in the reforming unit 216. The reforming unit 216 may convert the hydrocarbons in the light off-gases stream light off-gases into a mixture that includes carbon monoxide, hydrogen, carbon dioxide, water, and methane. In some instances, the reforming unit 216 may include a pre-former, steam methane reformer (SMR), autothermal reformer (ATR), partial oxidation (POX), the like, or any combination thereof.

The outlet temperature of the reforming unit 216 may be greater than 650 °C (e.g., greater than 675 °C, greater than 700 °C, greater than 725 °C, greater than 750 °C, greater than 775 °C, greater than 800 °C, greater than 825 °C, greater than 850 °C, greater than 875 °C, or greater than 900 °C). A higher outlet temperature may maximize the conversion of hydrocarbons. In recycle hydrocarbon stream 246 that include a high partial pressure of carbon dioxide, the carbon dioxide capture with the purification unit 218 may reduce the risk of carbon formation in the reforming unit 216.

In some instances, the reforming unit 216 may include an SMR. In such configurations, the heat that may be required for the reaction may be provided by a fire heater, oxycombustion heating, an electrical heater, or a combination thereof. In embodiments when the reforming unit 216 includes the oxycombustion heater, the oxygen stream 222, provided to the heater, may be from the electrolyzer 202.

In some instances, the fuel from the reforming unit 216 may be hydrogen. In such instances, the carbon loop of the system may be completely closed. For example, all of the carbon dioxide produced in the system may be recirculated and used in various units within the system. In some embodiments, minimizing the firing and maximizing the energy efficiency may be completed by introducing recuperative reforming, for example, using Enhanced Annual Reformer Tube for Hydrogen (EARTH^{®}) and syngas tubes. The integration of the tubes may enhance the heat integration and equipment design as the temperature difference between the hot reformer effluent and heat sinks in the rWGS section may be optimized.

In some instances, the reforming unit 216 may include the ATR unitor the POX. When the reforming unit 216 is an ATR unitor a POX unit, at least a portion of the oxygen stream 222 may be used in the ATR unit or the POX unit.

As discussed previously, the system 200 may be designed such that the off-gas reforming produces a reformer effluent stream 256 provides heat to drive the rWGS reaction and no additional system is required.

In some instances, the hydrocarbon concentration in the recycle hydrocarbon stream 232 may be below allowable thresholds for the given reaction therein. Accordingly, the feed to the reforming unit 216 may be supplemented (not illustrated) with an additional hydrocarbon stream (e.g., fed directly to the reforming unit 216). For example, the additional hydrocarbon stream may include light hydrocarbons produced from a biological source. For example, the off-gas may be from an adjacent biofuel plant or a synthetic natural gas source.

In some instances, the rWGS section, which includes the first rWGS reactor 204 in a reaction mode and the second rWGS reactor 214 in regeneration mode, may be integrated with the reforming unit 216 (referred to herein as the integrated reforming/rWGS unit). The integrated reforming/rWGS unit may minimize the total external energy heat demand of the system. For example, the integrated reforming/rWGS unit may not include any external energy input in the form of heat.

Additionally, the system may recycle hydrogen by recycling light hydrocarbons from downstream units through reformer unit 216. Alternatively, LPG, naphtha, other liquid fuel products, or any combination thereof that are not of interest in the final product may be recycled to the reformer unit 216. The hydrogen may be recycled back to the first rWGS reactor 204 in reaction mode. By recycling hydrogen , the size, and thus the energy consumption, of the electrolyzer 202 may be reduced. For example, the energy input to the electrolyzer 202 may be eight times higher than recycling hydrogen from downstream units and/or streams. Thus, the energy input to the system 200 from external sources may be decreased. Additionally, the recycled hydrogen may reduce the import of water that is needed for the electrolyzer 202, which may, in turn, reduce the size, number, and energy use of the water purification systems. Further, as discussed herein, the system 200 may further recycle the water (e.g., condensate) from the condensation and separation unit 206 and the second separation and conditioning unit 212 to the electrolyzer 202. Recycling the carbon dioxide from the first separation and conditioning unit 208 and the purification unit 218, if present, and from recycling light hydrocarbons from downstream synthesis unit through reformer unit 216 may allow the system 200 to be free of direct carbon dioxide emissions, while at the same time reducing the number of and energy input for carbon dioxide capture units that may be included in the system 200.

Optionally, the flowlines depicted in FIG. 2 may include sensors positioned along one or more of the flow lines to independently read the concentrations and conditions of fluid passing therethrough. For example, the sensors may read pressures, temperatures, and concentrations of components in the stream passing through the flow lines. The sensors may relay information to the operator of the system via computer implemented methods.

### EXAMPLES

Table 1 provides the input and output data for three example modelled systems that include an electrolyzer, an rWGS reactor, optionally a reforming unit, a condensation and separation unit, a first separation and conditioning unit, a FT synthesis unit that targets producing higher hydrocarbons (mostly waxes), and a second separation and conditioning unit that includes a hydrocracking unit to produce mainly synthetic gasoline and jet fuel. The examples are based on a production rate of 1000 barrels per day.

The system of Comparative Example 1 is configured for hydrogen to by supplied to the rWGS reactor solely from the electrolyzer, all carbon dioxide supplied to the rWGS is from an external source, and the light hydrocarbon off-gas from the second separation and conditioning unit to be supplied to a combined gas turbine cycle to generate power. Comparative Example 1 does not include a reforming unit. Rather, the hydrocarbons in the light off-gases are utilized in a combined cycle gas turbine to generate power, and the carbon dioxide generated is emitted through the flue gas.

The system of Comparative Example 2 is configured for a high-temperature rWGS reaction with a parallel SMR-based reformer and the light hydrocarbon off-gas to be recycled to the SMR-based reformer.

The system of Example 1 is configured for a SMR-based reformer integrated with the rWGS reactor. In Example 1, (i) the rWGS reactor operates at a lower temperature than the rWGS reactor in Comparative Examples 1 and 2, (ii) the reformer firing is with hydrogen produced within the system and includes recuperative reforming thus operates at a lower temperature, and (iii) the light hydrocarbon off-gas to be recycled to the SMR-based reformer portion of the integrated reformer/rWGS unit.

**Table 1**

| | Comparative Example 1 | Comparative Example 2 | Example 1 |
|---|---|---|---|
| CO2 import (kTA) | 241 | 129 | 129 |
| Hydrogen from electrolyzer (kNm³/h) | 38.8 | 29.1 | 27.2 |
| Power consumption (GWh per year)⁽¹⁾ | 1647 | 1234 | 1156 |
| CO₂ Emission (kilo tons per annum, kTA)⁽²⁾ | 152 | 24.7 | 23.1 |
| Water import (kTA)⁽³⁾ | 103 | 166 | 145 |

| | | | |
|---|---|---|---|
| (1) Power consumption is expected to be ~90% dominated by the electrolyzer power consumption. (2) Based on Scope 1 and 2 emissions with an electricity carbon intensity of 20 g CO₂ per kWh, where Scope 1 is defined as direct emission from the plant, and Scope 2 is emission by consumed utilities like power. (3) Including condensate recycling | | | |

Comparative Example 1 does not close the complete carbon loop as the light hydrocarbons are not recycled to the rWGS process. Comparative Example 2 and Example 1 close the carbon loop and thus the import of carbon dioxide is reduced by almost 50 wt. % compared to Comparative Example 1. The system of Comparative Example 1 may be modified to capture a significant portion of the carbon dioxide from the flue gas and subsequently recycled back to the rWGS feed, thereby lowering carbon dioxide import to close Example 1. Further, the flue gas exhaust in the current configuration of Comparative Example 1 is a direct emission of carbon dioxide to the atmosphere. Adding the carbon dioxide capture unit the carbon dioxide emission would also decrease by about 110 kTA. However, in such a scenario, additional energy must be input into the system for the carbon dioxide capture unit.

The amount of hydrogen from the electrolyzer is decreased in Example 1 as compared to Comparative Examples 1 and 2. The reduction of hydrogen needed from the electrolyzer from Comparative Example 1 and Example 1 to Comparative Example 2 is because the hydrogen in the light hydrocarbon off-gas passes through the reforming unit, so the reformer effluent supplies hydrogen to the rWGS unit. The reduction of hydrogen needed from the electrolyzer from Example 1 to Comparative Example 2 is because the rWGS reactor operates at a lower temperature. Operation at a lower temperature results in the possibility of utilizing recuperative reforming (e.g., EARTH^{®} tubes) where the high level duty from the outlet of the reformer catalyst is recovered either with a heat exchanger within the reformer tube where part of the reaction duty is provided from heat recovery or by externally by a heat exchanger reformer and therefore a lower operating temperature of reformer effluent for the SMR-based reformer portion of the integrated reformer/rWGS unit. Accordingly, less firing is needed in the portion of the integrated reformer/rWGS unit of Example 1, which reduces the amount of hydrogen input from the electrolyzer to the overall system.

The majority of the power consumption for each of the systems is related to hydrogen production in the electrolyzer. For example, current electrolyzer technologies have a power consumption of about 50 to about 60 kW per kg of hydrogen gas which can result in 70 to 90 % of the total power consumption. Thus, reducing the hydrogen required from the electrolyzer reduces the power consumption of the system, as illustrated in Table 1.

Example 1 can include multiple benefits as compared to current technologies. For example, the system can have a reduced power consumption and energy footprint for at least the reasons describe previous. The parallel reaction of the reforming section integrated with the rWGS reactor maximizes the conversion to carbon monoxide and minimizes the hydrogen import as the equilibrium reaction is at more favorable conditions (for methane conversion and for carbon dioxide conversion). Additionally or alternatively, the rWGS reactor operates at lower temperatures (e.g., below 400 °C) as compared to current technology where temperatures are in excess of 600 °C. The lower operating temperature not only reduces the temperature of the reformer portion of the integrated reformer/rWGS unit but also reduces the risk of carburization and corrosion.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure. For instance, any examples described herein can be combined with any other examples to yield further examples.

## Claims

1. A method comprising:
reacting hydrogen and carbon dioxide in the presence of a first catalyst in a first reverse water gas shift (rWGS) reactor in reaction mode to produce a rWGS product comprising hydrogen, carbon monoxide, and water, wherein a catalyst bed inlet temperature in the rWGS reactor ranges from 250 °C to 400 °C;
removing at least a portion of the water from the rWGS product while the rWGS product is in the first rWGS reactor;
reacting recycle hydrocarbons from a synthesis unit in a reforming unit to produce a reformer effluent;
cooling and mixing the rWGS product with the reformer effluent to produce a cooled syngas, wherein the cooled syngas comprises hydrogen, carbon monoxide, methane, carbon dioxide, and water;
removing at least a portion of the water from the cooled syngas to produce a purified syngas;
reacting the purified syngas in the presence of a second catalyst in a synthesis unit to produce synthetic hydrocarbons; and
purifying the synthetic hydrocarbons to produce a hydrocarbon product and the recycle hydrocarbons.

2. The method of claim 1, wherein the first rWGS reactor contains a first adsorbent material and/or a water permeating membrane for the removing of the at least a portion of the water.

3. The method of any preceding claim, wherein the reacting of the hydrogen and the carbon dioxide is performed with an excess of the hydrogen.

4. The method of any preceding claim, wherein the reforming unit comprises a pre-former, steam methane reformer (SMR), autothermal reformer (ATR), partial oxidation (POX), the like, or any combination thereof.

5. The method of any preceding claim, wherein the cooling and mixing of the rWGS product with the reformer effluent comprises first cooling then mixing.

6. The method of any preceding claim, further comprising:
heating a regeneration gas with heat from the reformer effluent to produce a heated regeneration gas; and
contacting a second adsorbent material in a second rWGS reactor in regeneration mode with the heated regeneration gas to produce water.

7. The method of claim 6, further comprising:
electrolyzing water to produce hydrogen and oxygen;
feeding at least a portion of the hydrogen produced by the electrolyzing to the first rWGS reactor; and
using at least a portion of the water produced from regenerating the second rWGS reaction and/or at least a portion of the water removed from the rWGS product in the electrolyzing.

8. The method of claim 6, further comprising:
changing the first rWGS reactor from the reaction mode to the regeneration mode;
and
changing the second rWGS reactor from the regeneration mode to the reaction mode.

9. The method of any preceding claim, wherein the recycle hydrocarbons comprise light hydrocarbon off-gas, liquefied petroleum gas, naphtha, or any combination thereof.

10. The method of any preceding claim, wherein the purifying of the synthetic hydrocarbons includes capturing at least a portion of the carbon dioxide from the recycle hydrocarbons; and wherein the method further comprises supplying at least a portion of the carbon dioxide from the recycle hydrocarbons to the first rWGS reactor.

11. The method of any preceding claim, further comprising:
supplying heat to the first rWGS reactor from the reformer effluent.

12. The method of any preceding claim, further comprising:
preheating the hydrogen and the carbon dioxide before introduction to the rWGS reactor; and optionally, further comprising preheating the hydrogen and the carbon dioxide utilizing heat recovered from the reformer effluent and/or the rWGS product originating from the first rWGS reactor and/or a further rWGS product originating from a further rWGS reactor.

13. The method of any preceding claim, wherein the hydrocarbon product is a synthetic fuel, a wax, an alcohol, an olefin, or ethylene oxide.

14. A system comprising:
a first rWGS reactor in reaction mode configured to receive a carbon dioxide stream and a first hydrogen stream, receive heat from a reformer effluent stream, produce a rWGS product stream, and remove at least a portion of water in the rWGS product stream in situ;
a reforming unit integrated with the first rWGS reactor and configured to receive a recycle hydrocarbon stream and produce the reformer effluent stream;
condensation and separation unit configured to receive the rWGS product stream, the reformer effluent stream, or a mixture thereof, remove water therefrom, and produce a water stream and a cooled syngas stream;
a first separation and conditioning unit configured to receive the cooled syngas stream, extract hydrogen and carbon dioxide therefrom, and produce a purified syngas stream;
a synthesis unit configured to receive the purified syngas stream and produce a synthetic hydrocarbons stream; and
a second separation and conditioning unit configured to receive the synthetic hydrocarbons stream and produce a hydrocarbon product stream and the recycle hydrocarbon stream.

15. The system of claim 14, wherein the first rWGS reactor contains a first adsorbent material that adsorbs water, and wherein the system further comprises a second rWGS reactor in regeneration mode configured to receive heat from the reformer effluent stream and produce a first water stream, the second rWGS reactor containing a second adsorbent material, wherein the first rWGS reactor optionally contains a water permeating membrane.
